# EUROPEAN PATENT SPECIFICATION

(11) **EP 2 211 609 B1**
(45) Date of publication and mention of the grant of the patent: **23.03.2016**
(21) Application number: 08806648.5
(22) Date of filing: 17.09.2008
(51) Int. Cl.: A01M 23/12

(54) **Animal trap and method of trapping animals**
Tierfalle und Verfahren zum Fangen von Tieren
Piège à animaux et procédé pour piéger des animaux

(30) Priority: 21.11.2007 GB 0722801
(43) Date of publication of application: 04.08.2010
(73) Proprietor: Thorne, Paul, Leeds, Yorkshire LS21 3NF (GB)
(72) Inventor: Thorne, Paul, Leeds, Yorkshire LS21 3NF (GB)
(74) Representative: Appleyard Lees
(86) International application number: PCT/GB2008/050832
(87) International publication number: WO 2009/066095

(56) References cited:
- NL-C1- 1 014 468
- US-A- 1 464 697
- US-A- 2 445 166
- US-A- 4 253 264
- US-A- 4 641 456
- US-A- 4 653 221

## Description

The present invention relates to animal traps, particularly to rodent traps, such as traps suitable for trapping rats and mice.

It is a known fact that some animals are pests under certain circumstances. A particular order of animal that is often regarded as a pest is Rodentia (rodents). Rodents, particularly mice and rats, can represent a large problem by causing damage to property and seed/grain stores. Many rodents are also known to carry and spread disease.

Many systems and devices are known to control the population of rodents. For example, poisons may be administered to be ingested by the rodent, the rodent subsequently being left to slowly die. Alternatively, mechanical systems, such as a conventional mouse trap are known to trap and usually kill rodents quite quickly.

Many of the existing systems and devices however have known associated problems. For example, many known systems are un-necessarily cruel and may cause the rodent excessive pain and suffering. Mechanical systems, such as a conventional mouse trap may cause less suffering because death of the rodent is usually instantaneous, but can only be used once before being reset. Additionally, many known systems and devices may pose a threat to other non target animals, such as cats and dogs or even pose a risk to small children.

Document US 4 641 456 A discloses a mouse trap comprising a trap section having a pusher plate which pushes a mouse detected by a pair of touchplates embedded in the floor of the trap section into a mouse storing section where it is confined alive.

It is an object of aspects of the present invention to provide one or more solutions to the above mentioned or other problems.

According to a first aspect of the present invention there is provided an animal trap comprising the technical features of independent claim 1.

Preferably, the animal trap is a rodent trap, such as a rat trap or a mouse trap.

Preferably, the animal detection means comprises pressure sensing means, which are preferably situated on at least a portion of a floor of the trap section. Preferably, the pressure sensing means is operable to signal to the control means when an animal stands thereon.

Preferably, the control means comprises an electronic circuit. Preferably, the animal detection means is operable, upon detection of an animal, to complete the electronic circuit. In a particularly preferred embodiment, the animal detection means comprises pressure sensing means operable to complete an electronic circuit of the control means upon sensing a pressure thereon.

The animal trap comprises trapped animal storing means. The trapped animal storing means may be removable from the animal trap. The trapped animal storing means may be operable to store a plurality of trapped animals, in use. For example, the trapped animal storing means may be operable to store 3, 4, 5, 8, 10 or more trapped animals.

Advantageously, the trapped animal storing means allows the trap to store more than one trapped animal, thus the trap does not require to be reset after each use by human intervention. Also, there is no requirement to re-bait the animal trap, because the bait is situated in an area that is not accessible to the animal.

The trap section comprises an impact surface, which is preferably situated generally opposite the at least one moveable wall section.

The impact surface is situated on or adjacent an impact wall. The impact wall comprises an aperture therethrough which opens into the trapped animal storing means.

The impact surface may comprise a flap, preferably arranged over the aperture of the impact wall.

The impact surface is hingeably connected to the impact wall.

The impact surface is arranged relative to the impact wall so as to allow trapped animals to be moved from the trap section to the animal storage means, through the aperture in the impact wall.

The impact surface may be arranged to prevent access from the animal storing means to the trap section.

The impact surface may be arranged with regard to the impact wall to provide a one way door to allow animals into the animal storing means from the trap section via the aperture in the impact wall, but preferably to prevent access from the animal storing means to the trap section.

In one embodiment, the floor of the trap section may comprise an aperture which may allow access from the trap section into the trapped animal storing means.

The at least one moveable wall section is operable to push an animal onto the impact surface, in use.

Preferably, the trap section comprises a door to allow an animal access thereinto. Preferably, the door is a suitable shape/size for the animal to be trapped. Preferably, the at least one moveable wall section is moveable by virtue of an electricity supply, which may comprise a battery.

The at least one movable wall is moveable by compressed air. In such an embodiment the trap may comprise or be adapted to be attached to a supply of compressed air. The trap may comprise an air powered ram. Preferably, upon detection of an animal via the animal detection means, the at least one movable wall is caused to move by the air powered ram.

According to a further aspect of the present invention there is provided a method of trapping animals, the method comprising the technical features of independent claim 10.

All of the features contained herein may be combined with any of the above aspects in any combination.

For a better understanding of the invention, and to show how embodiments of the same may be carried into effect, reference will now be made, by way of example, to the accompanying diagrammatic drawings in which:
Figure 1 shows a perspective view of a first part of a rodent trap;
Figure 2 shows a perspective view of a second part of a rodent trap;
Figure 3 shows a perspective view of the first and second part of the rodent trap assembled together;
Figure 4 shows a perspective partial cutaway view of the first part of the rodent trap;
Figure 5 shows a control plate of the rodent trap; and
Figure 6 shows a plan view of the first part of the rodent trap;
Figure 7 shows a perspective view of a second embodiment of a rodent trap; and
Figure 8 shows a perspective view of a bottom section of a second embodiment of a rodent trap;
Figure 9 shows a perspective view inside a second embodiment of a rodent trap;
Figure 10 shows a plan view inside a second embodiment of a rodent trap;

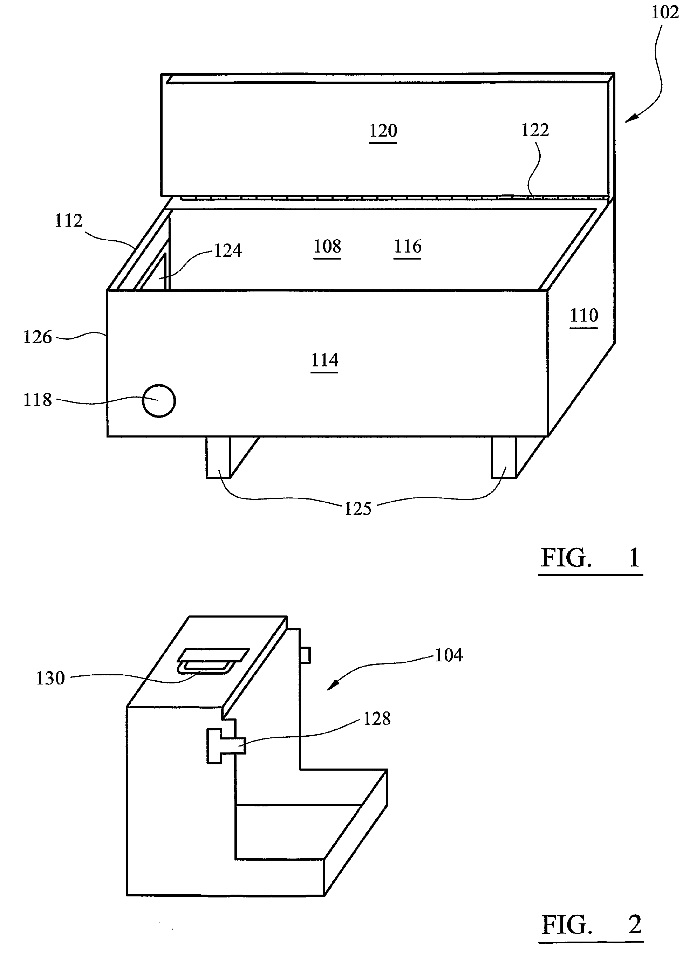

Referring first to figure 1 there is shown a first part 102 of a rodent trap 106. The first part 102 comprises a cuboidal box 108 having opposing short walls 110, 112 and opposing long walls 114, 116. On a first of the long walls 114, toward a lower corner thereof, is a circular hole 118, which extends through the wall into an interior of the box 108. Extending from an upper edge of the opposite long wall 116 is a lid 120. The lid 120 is connected to the wall 116 by a hinge 122 and is shown in figure 1 in an open configuration.

On a second of the short walls 112 is an aperture 124, covered by a flap 126. The flap 126 is fixed on an exterior of the box 108 and is slightly larger than the aperture 124. The flap 126 is hinged to the side wall 112 above an upper edge of the aperture 124. The aperture 124 and flap 126 will be discussed in more detail hereunder.

A base of the box 108 has legs 125 extending therefrom, such that the box is lifted slightly off a surface upon which it stands.

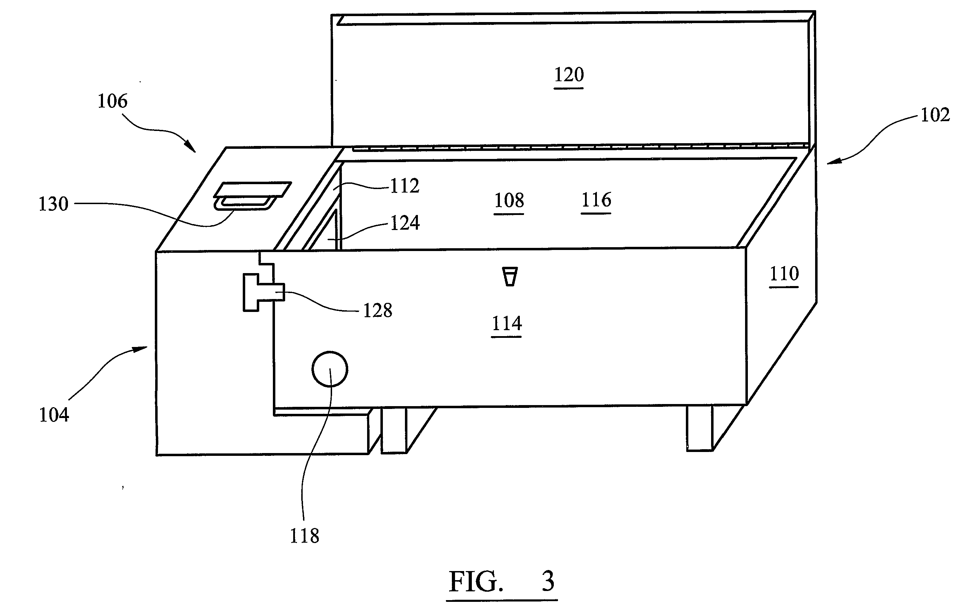

Referring now to figure 2 there is shown a second part 104 of the rodent trap 106. The second part 104 comprises a cuboidal box having a large portion thereof cutaway to leave a partially enclosed collection box. Toward a top of the cutaway section of the second part 104 are clips 128 that allow the second part 104 to be secured to the first part 102 as will be described hereunder. On an upper surface of the second section is a handle 130. The cutaway potion is shaped such to correspond with and fit around the first part, as is shown in figure 3.

Referring now to figure 3, there is shown the first section 102 and the second section 104 joined together to form the rodent trap 106. As discussed above with regard to figure 2, the second part accommodates and fits around the first part. Specifically, the second part fits over the second of the short walls 112 and extends around and under a portion of a base of the box 108.

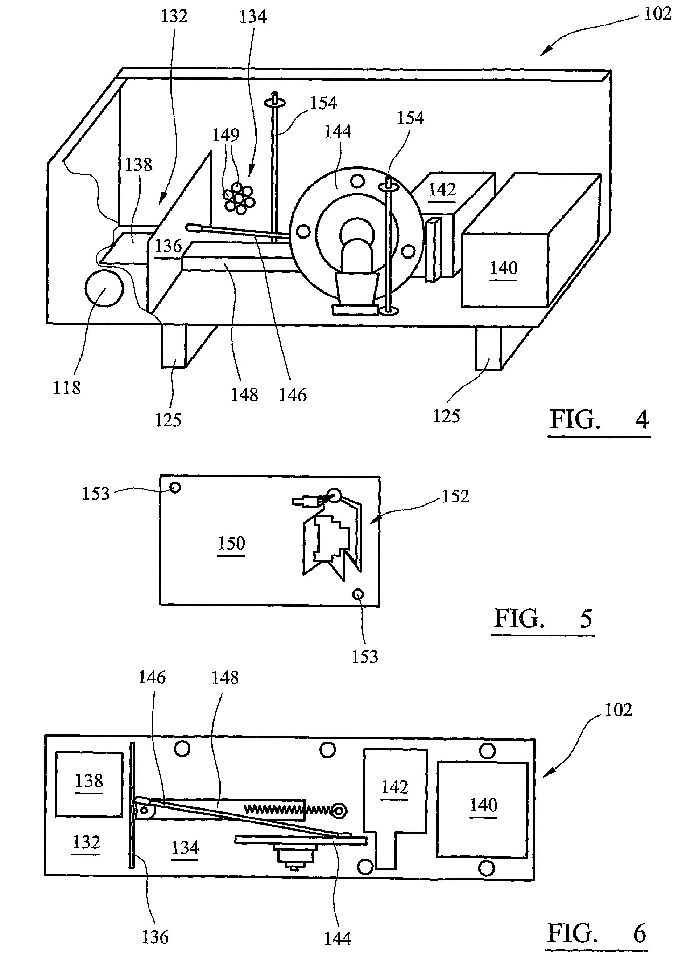

Referring now to figure 4 there is shown a partial cutaway view of the first part 102, having most of the long wall 114 removed, and the short wall 110 removed.

Inside the box 108 are two areas 132, 134, separated by a wall 136. The first area 132 is accessible via the hole 118 in the long wall 114 and comprises a pressure sensitive section 138 on a floor thereof. The second area 134 comprises electrical and mechanical components to operate the trap 106.

In more detail, the second area 134 comprises a battery 140, such as a 12 volt car battery, connected to a motor 142, such as a car starter motor. The motor is connected to a circular flywheel 144, which is mounted vertically on an axel and is free to rotate when caused to do so by the motor 142. The flywheel 144 has a rod 146 connected, off centre, to a face thereof, such that when the flywheel 144 rotates, the rod 146 moves in a reciprocating manner.

The rod 146 is connected to the wall 136. The wall 136 is arranged on a runner 148, to allow it to move in a reciprocal manner. The second area 134 also has a vent 149 in the wall 116.

Figure 5 shows a plate 150, having electrical circuitry 152 thereon (a relay, etc), to control the action of the rodent trap 106. The plate 150 locates via apertures 153 onto upstanding rods 154 in the box 108.

Figure 6 shows a plan view of the interior of the box 108 and is labelled the same as figure 4.

In use, the rodent trap 106 operates as follows. Food (not shown) is placed in the second area 134 and air enters through the vent 149, over the food (not shown) thus the smell of the food will be carried around the trap 106 to attract rodents thereto.

A rodent enters the trap 106 via the hole 118. The hole is of an appropriate size for the target rodent, such as a rat or mouse. Thus, the rodent enters the box into the first area 132 and walks onto the pressure sensitive pad 138. This completes an electrical circuit, thus triggering a relay and causing the motor to operate and the flywheel to rotate, which moves the wall quickly toward the rodent and crushes it against the flap 126. The rodent dies almost instantaneously. The electrical circuit, after triggering, takes a few seconds to reset, in which time, the wheel rotates, a couple of times, more slowly, before coming to a rest. In these further rotations, the rodent is pushed through the flap 126, into the second section 104.

The second section may then be removed and emptied when a multitude of rodents have been caught.

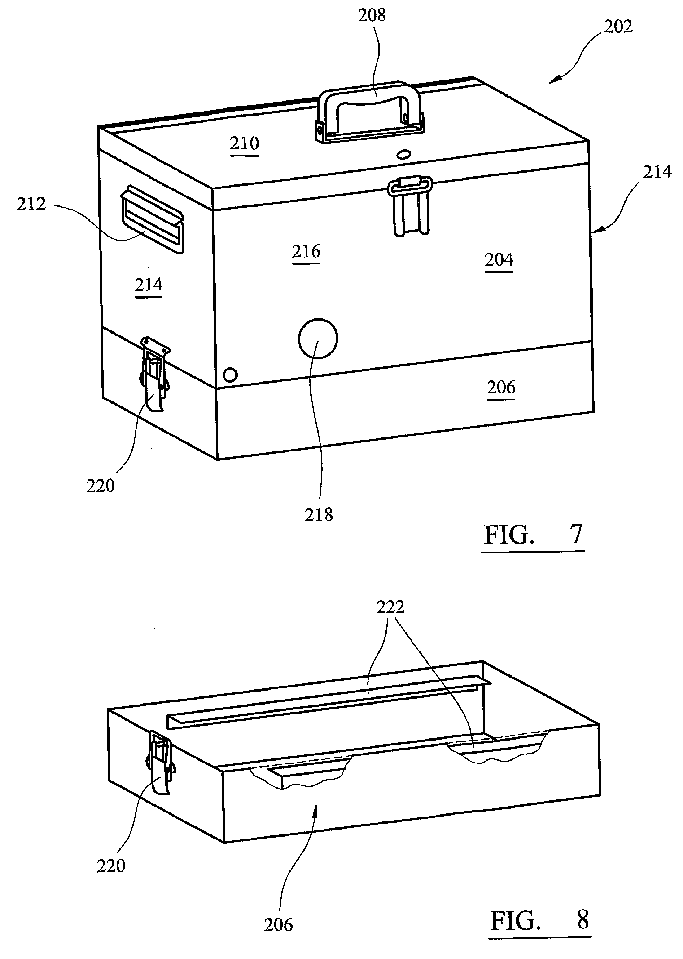

Referring now to figures 7 to 10 there is shown a second embodiment of a rodent trap 202. Referring to figure 7, the rodent trap 202 comprises a box 204 sat atop a tray 206. The box 204 comprises a handle 208 on a top surface thereof 210 and side handles 212 on side surfaces thereof 214. Toward a lower corner of a front face 216 of the box 204 is an aperture 218 through which a rodent can enter the box 204

The box 204 sits atop a tray 206, the two being held together by clips 220.

Referring to figure 8 there is shown the tray 206 detached from the box 204. Support brackets 222 can be seen inside the tray 206 upon which the box 204 is supported, in use.

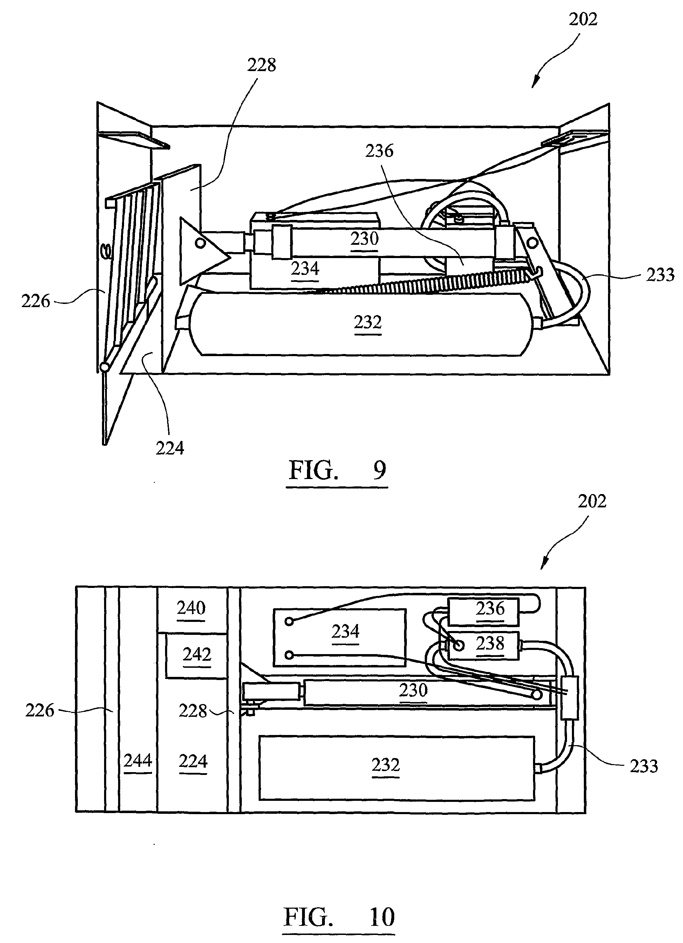

Referring now to figures 9 and 10 there is shown an interior of the box 204. The interior comprises a trap compartment 224 having a static wall 226 opposite a moveable wall 228. The moveable wall 228 is attached to an air powered ram 230, which is in turn attached to a compressed gas storage cylinder 232 via an air line 233 and an air valve 238. The interior also comprises a battery 234 connected to a timer relay 236.

The second embodiment of a rodent trap 202 functions in a similar manner to the first embodiment as follows. A rodent enters the trap compartment 224 via aperture 218 and is attracted to food on tray 240. Upon placing pressure on pressure sensitive pad 242 (by standing on it), the rodent triggers a circuit which causes the wall 228 to move toward the wall 226, thus causing the rodent to fall through hole in floor 244 and into the tray 206, which acts as trapped animal storage means and can store a plurality of rodents. In this manner, rodents are trapped.

A rodent trap made in accordance with the present invention has the advantage that the death of the target animal is very quick and thus unnecessary cruelty is avoided. Also, the trap can catch many animals without the need to be reset. Further, the caught animals are stored in a removable section, thus the trap is easy to empty.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s).

## Claims

1. An animal trap comprising a trap section (132) having at least one moveable wall section (136), being moveable with respect to other walls of the trap section to thereby alter the size of the trap section; animal detection means (138) operable to detect the presence of an animal within the trap section and adapted to signal such a presence to control means (152), which control means is operable, upon receipt of said signal from the detection means, to cause movement of the moveable wall section and thus alter the size of the trap section, wherein the at least one moveable wall (136) is moveable by compressed air, and wherein the trap further comprises an impact surface (126) situated on or adjacent to an impact wall (112), the impact wall comprising an aperture (124) therethrough, which aperture opens into animal storing means (104), the impact surface (126) being hingeably connected to the impact wall (112), wherein in use the at least one moveable wall section is operable to push an animal onto the impact surface (126) such as to crush and kill the animal against the impact surface before pushing the animal into the animal storing means.

2. An animal trap according to claim 1, wherein the animal is a rodent, such as a rat or mouse.

3. An animal trap according to either of claim 1 or claim 2, wherein the animal detection means (138) comprises pressure sensing means.

4. An animal trap according to claim 3, wherein the pressure sensing means is operable to signal to the control means when an animal stands thereon.

5. An animal trap according to either of claims 3 or 4, wherein the animal detection means comprises pressure sensing means operable to complete an electronic circuit of the control means upon sensing a pressure thereon.

6. An animal trap according to any preceding claim, wherein the animal trap comprises trapped animal storing means (104).

7. An animal trap according to claim 6, wherein the trapped animal storing means is removable from the animal trap.

8. An animal trap according to either of claims 6 or 7, wherein the trapped animal storing means is operable to store a plurality of trapped animals, in use.

9. An animal trap according to any preceding claim, wherein the impact surface (116) is situated generally opposite the at least one moveable wall section.

10. A method of trapping animals, the method comprising detecting the presence of an animal in a trap section of an animal trap using animal detection means (138); said animal detection means signalling the presence of an animal to control means (152), said control means causing movement of a moveable wall section (136) of the trap section to thereby alter the size of the trap section, wherein the moveable wall is moveable by compressed air, and wherein the trap further comprises an impact surface (126) situated on or adjacent to an impact wall (112), the impact wall comprising an aperture (124) therethrough, which aperture opens into animal storing means (104), the impact surface (126) being hingeably connected to the impact wall (112), wherein in use the at least one moveable wall section is operable to push an animal onto the impact surface such as to crush and kill the animal against the impact surface before pushing the animal into the animal storing means.

## Patentansprüche

1. Tierfalle, umfassend einen Fallenbereich (132) mit wenigstens einem beweglichen Wandbereich (136), der in Bezug auf andere Wände des Fallenbereichs beweglich ist, um dadurch die Größe des Fallenbereichs zu verändern; ein Tiererfassungsmittel (138), das dazu betriebsfähig ist, die Anwesenheit eines Tiers in dem Fallenbereich zu erfassen, und dazu geeignet ist, diese Anwesenheit einem Steuermittel (152) zu melden, wobei das Steuermittel dazu betriebsfähig ist, bei Erhalt des Signals von dem Erfassungsmittel eine Bewegung des beweglichen Wandbereichs zu verursachen und dadurch die Größe des Fallenbereichs zu verändern, wobei die wenigstens eine bewegliche Wand (136) durch Pressluft beweglich ist, und wobei die Falle ferner eine Aufprallfläche (126) umfasst, die sich an oder neben einer Aufprallwand (112) befindet, wobei die Aufprallwand eine hindurchführende Öffnung (124) umfasst, wobei sich die Öffnung in ein Tieraufbewahrungsmittel (104) öffnet, wobei die Aufprallfläche (126) schwenkbar mit der Aufprallwand (112) verbunden ist, wobei der wenigstens eine bewegliche Wandbereich bei Verwendung dazu betriebsfähig ist, ein Tier so gegen die Aufprallfläche (126) zu schieben, dass das Tier an der Aufprallfläche erdrückt und getötet wird, bevor das Tier in das Tieraufbewahrungsmittel geschoben wird.

2. Tierfalle nach Anspruch 1, wobei das Tier ein Nagetier wie etwa eine Ratte oder eine Maus ist.

3. Tierfalle nach einem der Ansprüche 1 oder 2, wobei das Tiererfassungsmittel (138) ein Druckerkennungsmittel umfasst.

4. Tierfalle nach Anspruch 3, wobei das Druckerkennungsmittel dazu betriebsfähig ist, eine Meldung an das Steuermittel vorzunehmen, wenn ein Tier darauf steht.

5. Tierfalle nach einem der Ansprüche 3 oder 4, wobei das Tiererfassungsmittel ein Druckerkennungsmittel umfasst, das dazu betriebsfähig ist, bei Erkennen eines Drucks darauf eine elektronische Schaltung des Steuermittels zu vervollständigen.

6. Tierfalle nach einem der vorhergehenden Ansprüche, wobei die Tierfalle ein Aufbewahrungsmittel (104) für gefangene Tiere umfasst.

7. Tierfalle nach Anspruch 6, wobei das Aufbewahrungsmittel für gefangene Tiere von der Tierfalle abnehmbar ist.

8. Tierfalle nach einem der Ansprüche 6 oder 7, wobei das Aufbewahrungsmittel für gefangene Tiere bei Verwendung dazu betriebsfähig ist, mehrere gefangene Tiere aufzubewahren.

9. Tierfalle nach einem der vorhergehenden Ansprüche, wobei sich die Aufprallfläche (126) dem wenigstens einen beweglichen Wandbereich im Allgemeinen gegenüberliegend befindet.

10. Verfahren zum Fangen von Tieren, wobei das Verfahren das Erfassen der Anwesenheit eines Tiers in einem Fallenbereich einer Tierfalle unter Verwendung eines Tiererfassungsmittels (138) umfasst; wobei das Tiererfassungsmittel einem Steuermittel (152) die Anwesenheit eines Tiers meldet, wobei das Steuermittel eine Bewegung eines beweglichen Wandbereichs (136) des Fallenbereichs verursacht, um dadurch die Größe des Fallenbereichs zu verändern, wobei die bewegliche Wand durch Pressluft beweglich ist, und wobei die Falle ferner eine Aufprallfläche (126) umfasst, die sich an oder neben einer Aufprallwand (112) befindet, wobei die Aufprallwand eine hindurchführende Öffnung (124) umfasst, wobei sich die Öffnung in ein Tieraufbewahrungsmittel (104) öffnet, wobei die Aufprallfläche (126) schwenkbar mit der Aufprallwand (112) verbunden ist, wobei der wenigstens eine bewegliche Wandbereich bei Verwendung dazu betriebsfähig ist, ein Tier so gegen die Aufprallfläche zu schieben, dass das Tier an der Aufprallfläche erdrückt und getötet wird, bevor das Tier in das Tieraufbewahrungsmittel geschoben wird.

## Revendications

1. Piège à animaux comprenant une section de piège (132) ayant au moins une section de paroi mobile (136), déplaçable par rapport à d'autres parois de la section de piège pour ainsi modifier la taille de la section de piège ; un moyen de détection d'animal (138) actionnable pour détecter la présence d'un animal dans la section de piège et adapté pour signaler cette présence à un moyen de commande (152), lequel moyen de commande est actionnable, à la réception dudit signal depuis le moyen de détection, pour entraîner un mouvement de la section de paroi mobile et ainsi modifier la taille de la section de piège, dans lequel l'au moins une paroi mobile (136) est déplaçable par air comprimé, et dans lequel le piège comprend en outre une surface d'impact (126) située sur, ou adjacente à, une paroi d'impact (112), la paroi d'impact comprenant une ouverture (124) qui la traverse, laquelle ouverture s'ouvre dans un moyen de stockage d'animal (104), la surface d'impact (126) étant raccordée de manière articulée à la paroi d'impact (112), dans lequel durant l'utilisation l'au moins une section de paroi mobile est actionnable pour pousser un animal sur la surface d'impact (126) de manière à broyer et tuer l'animal contre la surface d'impact avant de pousser l'animal dans le moyen de stockage d'animal.

2. Piège à animaux selon la revendication 1, dans lequel l'animal est un rongeur, tel qu'un rat ou une souris.

3. Piège à animaux selon la revendication 1 ou la revendication 2, dans lequel le moyen de détection d'animal (138) comprend un moyen de détection de pression.

4. Piège à animaux selon la revendication 3, dans lequel le moyen de détection de pression est actionnable pour signaler au moyen de commande le moment où un animal se tient sur le moyen de détection de pression.

5. Piège à animaux selon la revendication 3 ou la revendication 4, dans lequel le moyen de détection d'animal comprend un moyen de détection de pression actionnable pour fermer un circuit électronique du moyen de commande à la détection d'une pression sur le moyen de détection de pression.

6. Piège à animaux selon l'une quelconque des revendications précédentes, le piège à animaux comprenant un moyen de stockage d'animaux piégés (104).

7. Piège à animaux selon la revendication 6, dans lequel le moyen de stockage d'animaux piégés peut être retiré du piège à animaux.

8. Piège à animaux selon la revendication 6 ou la revendication 7, dans lequel le moyen de stockage d'animaux piégés est actionnable pour stocker une pluralité d'animaux piégés, durant l'utilisation.

9. Piège à animaux selon l'une quelconque des revendications précédentes, dans lequel la surface d'impact (126) est située généralement à l'opposé de l'au moins une section de paroi mobile.

10. Procédé de piégeage d'animaux, le procédé comprenant la détection de la présence d'un animal dans une section de piège d'un piège à animaux en utilisant un moyen de détection d'animal (138) ; ledit moyen de détection d'animal signalant la présence d'un animal à un moyen de commande (152), ledit moyen de commande entraînant le mouvement d'une section de paroi mobile (136) de la section de piège pour ainsi modifier la taille de la section de piège, dans lequel la paroi mobile est déplaçable par air comprimé, et dans lequel le piège comprend en outre une surface d'impact (126) située sur, ou adjacente à, une paroi d'impact (112), la paroi d'impact comprenant une ouverture (124) qui la traverse, laquelle ouverture s'ouvre dans un moyen de stockage d'animal (104), la surface d'impact (126) étant raccordée de manière articulée à la paroi d'impact (112), dans lequel durant l'utilisation l'au moins une section de paroi mobile est actionnable pour pousser un animal sur la surface d'impact de manière à broyer et tuer l'animal contre la surface d'impact avant de pousser l'animal dans le moyen de stockage d'animaux.
